# EUROPÄISCHE PATENTSCHRIFT

(11) **EP 3 187 302 B1**
(45) Veröffentlichungstag und Bekanntmachung des Hinweises auf die Patenterteilung: **14.10.2020**
(21) Anmeldenummer: 16002542.5
(22) Anmeldetag: 30.11.2016
(51) Int. Cl.: B23Q 11/08, F16J 15/3288

(54) **WERKZEUGHALTER**
TOOL HOLDER
PORTE-OUTIL

(30) Priorität: 28.12.2015 DE 102015016890
(43) Veröffentlichungstag der Anmeldung: 05.07.2017
(73) Patentinhaber: Sauter Feinmechanik GmbH, 72555 Metzingen (DE)
(72) Erfinder: Schanz, Manfred, 72760 Reutlingen (DE); Ceken, Okan, 72581 Dettingen/Erms (DE)
(74) Vertreter: Bartels und Partner, Patentanwälte

(56) Entgegenhaltungen:
- EP-A1- 0 905 421
- EP-A1- 1 995 465
- WO-A1-03/081095
- DE-B3-102014 007 499
- GB-A- 2 151 724
- JP-A- 2007 139 045
- US-A- 4 117 750
- US-A1- 2010 270 747

## Beschreibung

Die Erfindung betrifft einen Werkzeughalter, insbesondere für den Einsatz bei Werkzeugrevolvern, mit den Merkmalen im Oberbegriff von Anspruch 1.

Wie im Dokument EP 2 687 326 B1 beispielhaft aufgezeigt, sind Werkzeughalter Stand der Technik. Aufgrund der zunehmenden Qualität der Bearbeitungswerkzeuge und der mit diesen durchgeführten Hochleistungsbearbeitung, bei der sehr hohe Spindeldrehzahlen zum Einsatz kommen und mit hohen Zustellkräften gearbeitet wird, ist insbesondere die vordere Lagerstelle der Spindellagerung hohen Belastungen ausgesetzt. Aufgrund dieser besonderen Anforderungen ist die vordere Lagerstelle durch von außen eindringende Medien, wie Schmutz oder Flüssigkeit, aufs Stärkste gefährdet. Um zu verhindern, dass Schmutz, wie Stäube oder feine Partikel, die bei spanender oder abrasiver Bearbeitung entstehen, zur Lagerung vordringen können, beispielsweise zusammen mit Kühlschmierstoff, muss die Dichteinrichtung besonders hohen Anforderungen genügen. Da bei den in Frage kommenden hohen Drehzahlen übliche Radial-Wellendichtringe, sog. Simmerringe, wegen zu schnellen Verschleißes nicht zufriedenstellend einsetzbar sind, werden im Stand der Technik Zusatzmaßnahmen ergriffen, um einen Schadstoffzutritt zur Lagerstelle zu verhindern. So ist, wie in dem genannten Dokument aufgezeigt, die Zufuhr eines unter Druck stehenden Sperrmediums, wie Sperrluft, vorgesehen, um eine Art Luftvorhang als Barriere gegen von außen eindringende Medien zu bilden. Abgesehen davon, dass innerhalb des Gehäuses Fluidführungen als Verteilereinheit ausgebildet werden müssen, um die Luftströmung in geeigneter Weise zu führen, ist bei den bekannten Lösungen eine externe Druckluftversorgung erforderlich, was zu erhöhten Betriebskosten führt.

Die WO 03/081095 A1 beschreibt einen Werkzeughalter mit den Merkmalen im Oberbegriff von Anspruch 1, insbesondere für den Einsatz bei Werkzeugrevolvern, mit einem Gehäuse und einer darin aufgenommenen und mittels mindestens einer Lagerstelle drehbar gelagerten und antreibbaren Werkzeugspindel, die einen Aufnahmeraum zwecks Aufnahme eines auswechselbaren Bearbeitungswerkzeugs aufweist, wobei zwischen dem Gehäuse und der Werkzeugspindel eine Dichteinrichtung angeordnet ist, wobei mindestens eine Dichtung der Dichteinrichtung aus einer Bürstendichtung gebildet ist.

Weitere Werkzeughalter gehen aus der DE 10 2014 007 499 B3, der US 4 117 750 und der GB 2 151 724 A hervor. Bürstendichtungen werden in der JP 2007-139045, der EP 1 995 465 A1, der US 2010/0270747 A1 und der EP 0 905 421 A1 offenbart.

Ausgehend von diesem Stand der Technik stellt sich die Erfindung die Aufgabe, einen Werkzeughalter der eingangs genannten Gattung zur Verfügung zu stellen, der bei besonders einfacher Bauweise einen sicheren Schutz der gefährdeten Lagerstelle gegen äußere Schadeinflüsse gewährleistet.

Erfindungsgemäß ist diese Aufgabe durch einen Werkzeughalter gelöst, der die Merkmale des Patentanspruchs 1 in seiner Gesamtheit aufweist. Gemäß dem kennzeichnenden Teil des Anspruchs 1 zeichnet sich die Erfindung dadurch aus, dass Borsten der Bürstendichtung Teil eines Einlegestreifens sind, der in eine Aufnahmenut eines Dichtungsringes einlegbar ist und der in Form eines flexiblen, flachen Bandes aus einem Kunststoffmaterial vorgesehen ist.

Dabei kann die Anordnung mit besonderem Vorteil so getroffen sein, dass der Einlegestreifen mittels einer Klebeverbindung in der Aufnahmenut festlegbar ist. Der den Träger der Borsten bildende Einlegestreifen ist durch das Kunststoffband gebildet, in das die Borsten mit den inneren Enden eingebettet sind.

Es ist ferner vorgesehen, dass mindestens eine Dichtung der Dichteinrichtung aus einer Bürstendichtung gebildet ist. Durch den Einsatz der Bürstentechnologie kann mit sehr hohen Umfangsgeschwindigkeiten (bis zu 500 m/s) im Wesentlichen verschleißfrei gearbeitet werden. Die sehr geringe Reibung führt lediglich zu geringer Wärmeerzeugung und damit zu geringem Energieverlust. Die Bürstendichtung ist gegen Verschmutzung unempfindlich, weil kleinste Partikel, die bei einem Wellendichtring eine Dichtlippe zerstören würden, von der Bürste "geschluckt" werden. Außerdem ist keine Sperrluft nötig, so dass Energie und Kosten für Druckluft entfallen.

Die Bürstendichtung kann in vorteilhafter Weise aus einem Dichtungsring gebildet sein, mit einzelnen Borsten, die um einen vorgebbaren Abstand in den Innenraum des Dichtungsringes vorstehen und in Anlage mit der Werkzeugspindel sind, wobei die einzelnen Borsten mit ihrem Überstand gekrümmt mit der Werkzeugspindel zur Anlage kommen.

Zumindest die Borsten der Bürstendichtung können vorteilhafterweise aus einem dauerabriebfesten Kunststoffmaterial, vorzugsweise aus Polypropylen-Material, gebildet sein. Eine derartige Bürstendichtung gewährleistet eine sichere Abdichtung über lange Betriebszeiträume hinweg.

Für den optimalen Schutz der Spindellagerung ist der die Bürstendichtung bildende Dichtungsring in das Gehäuse, von der Umgebung her gesehen vor der ersten Lagerstelle, eingesetzt, insbesondere eingeschraubt.

Wenn bei Bearbeitungsvorgängen, bei denen betreffende Werkzeughalter eingesetzt sind, Kühlschmierstoffe zur Bearbeitungszone zugeführt werden, kann gegebenenfalls ein relativ starker Strahl des Kühlschmierstoffs auf die Spindelnase auftreffen. Um sicherzustellen, dass auch unter hohem Druck (bis zu 80 bar) stehendem Kühlschmierstoff und einem entsprechend harten, auf die Spindelnase auftreffenden Strahl die Lagerstelle gegen Flüssigkeitszutritt gesichert ist, ist bei besonders vorteilhaften Ausführungsbeispielen eine Labyrinthdichtung vorgesehen, die die Bürstendichtung zu der Umgebung hin abschließt. Durch diese, durch das Labyrinth gebildete zusätzliche Barriere wird der auftreffende Strahl des Kühlschmierstoffes so weit gebrochen, dass an der Bürstendichtung nur noch druckloser Kühlschmierstoff ansteht, gegen den die Bürstendichtung die sichere Barriere bildet.

Hinsichtlich der Anordnung der Bürstendichtung kann die Anordnung mit besonderem Vorteil so getroffen sein, dass der Dichtungsring mit einem Außengewinde versehen in ein stirnseitig eingebrachtes Innengewinde des Gehäuses einschraubbar ist.

Bezüglich der Ausbildung des Labyrinths kann die Anordnung mit Vorteil so getroffen sein, dass der Dichtungsring auf seiner der Lagerstelle abgewandten Stirnseite Ausnehmungen aufweist, mit denen vorspringende Eingriffsteile eines Ringkörpers in Eingriff kommen, der als weiterer Dichtungsring zumindest teilweise einen Labyrinthgang der Labyrinthdichtung bildet. Dieser weitere Labyrinth-Dichtungsring kann auf den Dichtungsring der Bürstendichtung aufgeschraubt sein, und eine nach außen vorspringende Stufe der Werkzeugspindel kann den weiteren Dichtungsring zumindest teilweise übergreifen. Da die Stufe der drehbaren Werkzeugspindel den Labyrinth-Dichtungsring als feststehendes Bauteil mit axialem Spiel übergreift und gegenüber der Innenseite des Labyrinth-Dichtungsringes ein radialer Spalt vorhanden ist, sind an dieser Innenseite und am Übergriff der Stufe Labyrinthabschnitte der Labyrinthdichtung gebildet.

Nachstehend ist die Erfindung anhand eines in der Zeichnung dargestellten Ausführungsbeispiels im Einzelnen erläutert. Es zeigen:
- Fig. 1: eine abgebrochen und in Längsrichtung aufgeschnitten gezeichnete perspektivische Schrägansicht eines Werkzeughalters gemäß einem Ausführungsbeispiel der Erfindung;
- Fig. 2: eine perspektivische Schrägansicht des Bürsten-Dichtungsringes des Ausführungsbeispiels mit nur teilweise eingelegtem Borstenelement;
- Fig. 3: eine Draufsicht des nicht eingelegten Borstenelements;
- Fig. 4: einen stark schematisch vereinfacht gezeichneten Querschnitt des Bürsten-Dichtungsringes; und

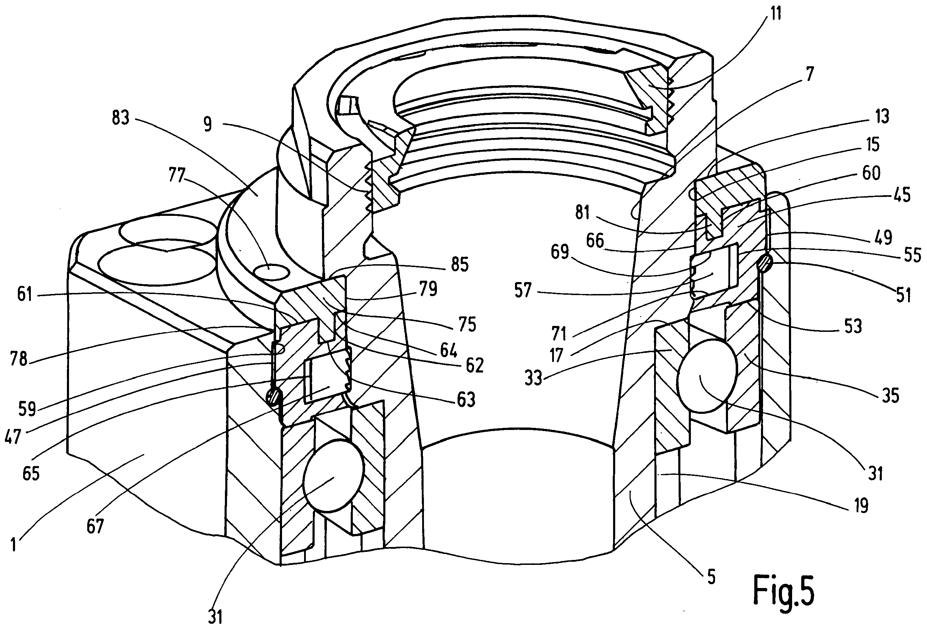

- Fig. 5: in gegenüber Fig. 1 vergrößerter Darstellung den der Spindelnase benachbarten, den Bürsten-Dichtungsring enthaltenden Bereich des Ausführungsbeispiels.

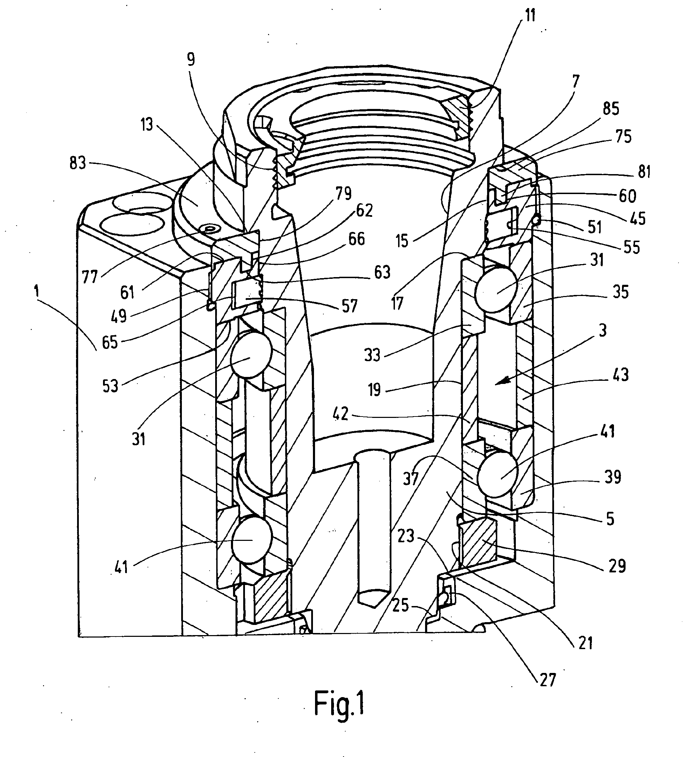

Die Fig. 1 zeigt von einem Ausführungsbeispiel des erfindungsgemäßen Werkzeughalters den der Spindelnase benachbarten vorderen Teil des Spindelgehäuses 1, in dem sich eine Wälzlagereinheit 3 als vordere Lagerstelle einer Werkzeugspindel 5 befindet. Der motorische Antrieb der Spindel 5 wie auch die Verbindung des Gehäuses 1 mit einem betreffenden Maschinenelement, wie der Werkzeugscheibe eines Werkzeugrevolvers, sind in der abgebrochenen Darstellung von Fig. 1 nicht gezeigt. Die Spindel 5 weist für die Aufnahme eines (nicht gezeigten) Bearbeitungswerkzeugs einen in üblicher Weise gebildeten Aufnahmeraum 7 auf, an dessen äußerem Ende ein Innengewinde 9 für einen Schraubring 11 ausgebildet ist. Dieser kann Bestandteil einer Halterung für ein im Aufnahmeraum 7 aufgenommenes Bearbeitungswerkzeug bilden. Die Spindel 5 weist einen gestuften Außenumfang auf, wobei von dem der Spindelnase benachbarten oberen Umfangsbereich ausgehend, der den größten Außendurchmesser besitzt, eine Stufe 13 den Übergang zu einem ersten zylindrischen Abschnitt15 verringerten Außendurchmessers bildet, an dessen innerem Ende eine zweite Stufe 17 den Übergang zu einem zweiten zylindrischen Abschnitt 19 verringerten Außendurchmessers bildet, an dem sich wiederum ein Außengewinde 21 anschließt. An das Außengewinde 21 anschließend setzt sich die Spindel 5 mit weiteren Stufen 23 und 25 mit jeweils verringertem Außendurchmesser fort, wobei zwischen den Stufen 23 und 25 eine Radial-Wellendichtung 27 zwischen Spindel 5 und Gehäuse 1 angeordnet ist.

Die Wälzlagereinheit 3 befindet sich am Außenumfang der Spindel 5 zwischen der Stufe 17 und einem Schraubring 29, der auf dem am unteren Endbereich des Abschnitts 19 gebildeten Außengewinde 21 sitzt. Die Wälzlagereinheit 3, die als Kugellagerung ausgebildet ist, weist für Lagerkugeln 31 eine der Spindelnase benachbarte obere Kugellaufbahn zwischen einem Innenring 33 und einem Außenring 35 auf. In entsprechender Weise ist zwischen einem unteren Innenring 37 und einem unteren Außenring 39 eine Kugellaufbahn für Lagerkugeln 41 gebildet. Zwischen den oberen Lagerringen 33 und 35 und den unteren Lagerringen 37 und 39 weist die Wälzlagereinheit 3 einen inneren kreiszylindrischen Lagermantel 42 und einen äußeren kreiszylindrischen Lagermantel 43 auf. Die Festlegung der Lagereinheit 3 auf dem Umfangsabschnitt 19 der Spindel 5 erfolgt durch den Schraubring 29, der eine Festlegekraft über den an ihm anliegenden unteren Innenring 37 und den Lagermantel 42 auf den oberen Innenring 33 überträgt und diesen an die Stufenfläche der Stufe 17 der Spindel 5 anlegt.

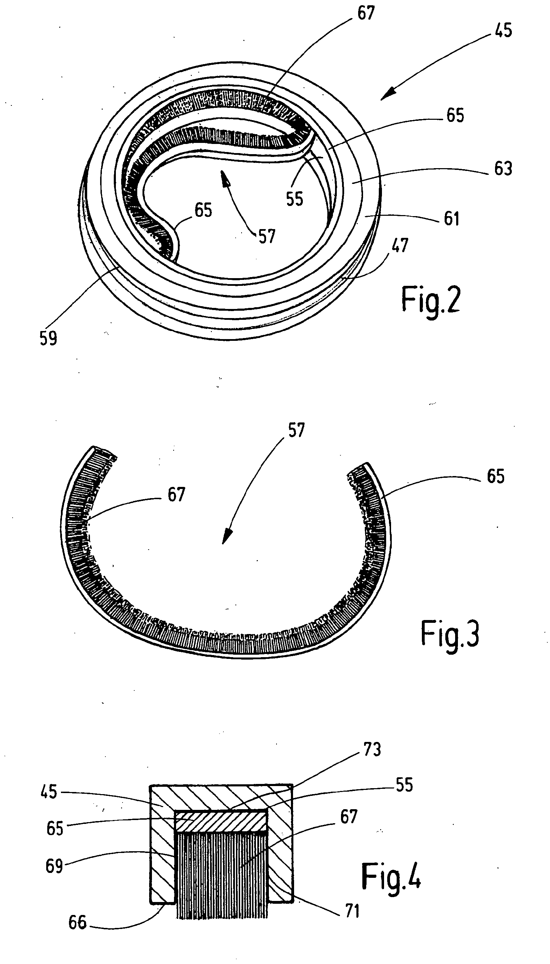

Für die Abdichtung der Wälzlagereinheit 3 gegenüber der Außenumgebung im Bereich der Spindelnase ist eine Bürstendichtung mit einem Bürsten-Dichtungsring 45 vorgesehen. Dieser hat, wie am deutlichsten der Fig. 2 zu entnehmen ist, die Form eines Schraubringes mit einem am Außenumfang befindlichen Außengewinde 47, mit dem er in ein Innengewinde 49 am äußeren Ende des Spindelgehäuses 1 eingeschraubt ist, wobei am Ende der Gewindestrecke des Innengewindes 49 ein O-Ring 51 eingelegt ist, der den Außenumfang des Bürsten-Dichtungsringes 45 gegenüber dem Gehäuse 1 abdichtet. Der Ringkörper des Bürsten-Dichtungsringes 45 weist auf der im eingeschraubten Zustand der Wälzlagereinheit 3 zugewandten Seite eine leicht vorspringende, an den Außenumfang angrenzende, ringförmige Planfläche 53 auf, mit der der eingeschraubte Bürsten-Dichtungsring 45 am oberen Außenring 35 der Wälzlagereinheit 3 anliegt. In die die zentrale Öffnung umgebende Innenseite 66 des Bürsten-Dichtungsringes 45 ist eine umlaufende Aufnahmenut 55 eingearbeitet, die einen rechteckförmigen Querschnitt aufweist und gegenüber dem Zentralbereich des Bürsten-Dichtungsringes 45 axial in Richtung auf die die Planfläche 53 aufweisenden Seite hin versetzt ist und das in Fig. 3 gesondert dargestellte Borstenelement 57 aufnimmt. Auf der der Planfläche 53 entgegengesetzten, der Spindelnase zugewandten oberen Seite weist der Bürsten-Dichtungsring 45 eine an das Außengewinde 47 sich anschließende schmale Ringfläche 59, eine sich radial nach innen daran anschließende und axial zur äußeren Stirnfläche hin leicht versetzte, breitere Ringfläche 61, eine sich daran anschließende vertiefte Ringnut 63 und eine auf diese folgende radial innere Ringfläche 65 auf, die sich bis zur zentralen Öffnung erstreckt. Die Ringnut 63 besitzt einen rechteckförmigen Querschnitt, wobei die Seitenwände 60 und 62 etwas länger sind als die Breite des Nutgrundes.

Wie die Fig. 2 und 3 zeigen, weist das Borstenelement 57 einen Einlegestreifen 65 in Form eines flexiblen, flachen Bandes aus einem Kunststoffmaterial auf, das den Träger für Borsten 67 aus einem dauerabriebfesten Kunststoffmaterial, beim vorliegenden Beispiel aus Polypropylen-Material, bildet. Wie in der stark schematisch vereinfachten Fig. 4 angedeutet ist, ist das Borstenelement 57 in die Aufnahmenut 55 derart eingesetzt, dass der Einlegestreifen 65 am Nutgrund anliegt und beide Seiten des Einlegestreifens 65 an den Seitenwänden 69 und 71 der Aufnahmenut 55 anliegen. Am Nutgrund ist der Einlegestreifen 65 durch eine Klebeverbindung 73 festgelegt. Wie am deutlichsten die Fig.4 zeigt, bilden die Borsten 67 eine sich über die ganze Breite des Einlegestreifens 65 und von Seitenwand 69 zu Seitenwand 71 der Aufnahmenut 55 des Borsten-Dichtungsringes 45 erstreckende Bürste, wobei die Borsten 67 über die Innenseite 66 des Bürsten-Dichtungsringes 45 überstehen. Im eingebauten Zustand liegen die Borsten 67 daher mit ihrem Überstand gekrümmt am Außenumfang der Werkzeugspindel 5 an. Der Dichtungsring 45 muss nicht zwingend als Gewindering ausgestaltet sein; er kann auch als aufschraubbarer Deckel ausgeführt sein.

Zur Bildung einer Labyrinthdichtung, die die Bürstendichtung zusätzlich zu der Umgebung hin abschließt, ist ein Labyrinth-Dichtungsring 75 als weiterer Dichtungsring vorgesehen, der mittels mehrerer Verschluss-Schrauben 77 zum Schutz von nicht näher dargestellten Montagebohrungen versehen ist. Der Labyrinth-Dichtungsring 75 ist fest mit der Werkzeugspindel 5 verbunden. Es besteht auch bei einer nicht dargestellten Ausführungsform die Möglichkeit, den Ring 75 mit der Spindel 5 als ein Teil auszubilden. Der Labyrinth-Dichtungsring 75 weist an der am Bürsten-Dichtungsring 45 anliegenden Stirnfläche ein erstes axial vorspringendes Eingriffsteil in Form einer am Außenumfang befindlichen schmalen Ringrippe 78 auf, die mit der vertieften Ringfläche 59 des Bürsten-Dichtungsringes 45 in passendem Eingriff ist. Zur Innenseite 79 des Dichtungsringes 75 hin, die die zentrale Öffnung begrenzt, ist als weiteres vorspringendes Eingriffsteil eine Ringrippe 81 vorgesehen, die einen zur Ringnut 63 des Bürsten-Dichtungsringes 45 komplementären Querschnitt besitzt und bei auf den Bürsten-Dichtungsring 45 aufgeschraubtem Zustand in die Ringnut 63 passend eingreift. Die vorspringende Rippe 78 sowie die Ringrippe 81 bilden dadurch Passelemente, die die genaue Fluchtung der Innenseiten 66 und 79 der Dichtungsringe 45 bzw. 75 sicherstellen, die die zentrale, von der Spindel 5 durchgriffene Öffnung begrenzen und dabei den radialen Spalt für die Drehbewegung der Spindel 5 relativ zu den feststehenden Dichtungsringen 45 und 75 bilden.

Wie bereits erwähnt, ist an der Spindel 5 am Übergang des an die Spindelnase angrenzenden oberen Spindelabschnitts eine Stufe 13 vorgesehen, die die ebene obere Stirnfläche 83 des Labyrinth-Dichtungsringes 75 übergreift, wobei an der Stufenfläche 85 wiederum ein, in diesem Fall in einer Radialebene verlaufender, Spalt für die Drehbewegung der Spindel 5 gebildet ist. Dieser Spalt und der demgegenüber um 90° abgewinkelte Spalt, der sich zwischen der Spindel 5 und den Innenseiten 79 und 66 des Labyrinth-Dichtungsringes 75 bzw. des Bürsten-Dichtungsringes 45 befindet, bildet den Labyrinthgang, der sich an die durch die Borsten 67 gebildete Bürstendichtung anschließt.

## Patentansprüche

1. Werkzeughalter, insbesondere für den Einsatz bei Werkzeugrevolvern, mit einem Gehäuse (1) und einer darin aufgenommenen und mittels mindestens einer Lagerstelle (3) drehbar gelagerten und antreibbaren Werkzeugspindel (5), die einen Aufnahmeraum (7) zwecks Aufnahme eines auswechselbaren Bearbeitungswerkzeugs aufweist, wobei zwischen dem Gehäuse (1) und der Werkzeugspindel (5) eine Dichteinrichtung (45) angeordnet ist, wobei mindestens eine Dichtung der Dichteinrichtung aus einer Bürstendichtung (45) gebildet ist, **dadurch gekennzeichnet, dass** Borsten (67) der Bürstendichtung (45) Teil eines Einlegestreifens (65) sind, der in eine Aufnahmenut (55) eines Dichtungsringes (45) einlegbar ist und der in Form eines flexiblen, flachen Bandes aus einem Kunststoffmaterial vorgesehen ist.

2. Werkzeughalter nach Anspruch 1, **dadurch gekennzeichnet, dass** die Borsten (67) mit einem vorgebbaren Überstand in den Innenraum des Dichtungsringes (45) vorstehen und in Anlage mit der Werkzeugspindel (5) sind.

3. Werkzeughalter nach Anspruch 2, **dadurch gekennzeichnet, dass** die einzelnen Borsten (67) mit ihrem Überstand gekrümmt in Anlage mit der Werkzeugspindel (5) sind.

4. Werkzeughalter nach einem der vorstehend genannten Ansprüche, **dadurch gekennzeichnet, dass** der Einlegestreifen (65) mittels einer Klebeverbindung (73) in der Aufnahmenut (55) festlegbar ist.

5. Werkzeughalter nach einem der vorstehend genannten Ansprüche, **dadurch gekennzeichnet, dass** zumindest die Borsten (67) der Bürstendichtung (45) aus einem dauerabriebfesten Kunststoffmaterial, vorzugsweise aus Polypropylen-Material, gebildet sind.

6. Werkzeughalter nach einem der vorstehend genannten Ansprüche, **dadurch gekennzeichnet, dass** der die Bürstendichtung bildende Dichtungsring (45) in das Gehäuse (1), von der Umgebung her gesehen vor der ersten Lagerstelle (3), eingesetzt, insbesondere eingeschraubt ist.

7. Werkzeughalter nach einem der vorstehend genannten Ansprüche, **dadurch gekennzeichnet, dass** eine Labyrinthdichtung (66, 79, 83, 85) die Bürstendichtung (45) zu der Umgebung hin abschließt.

8. Werkzeughalter nach einem der vorstehend genannten Ansprüche, **dadurch gekennzeichnet, dass** der Dichtungsring (45) mit einem Außengewinde (47) versehen in ein stirnseitig angebrachtes Innengewinde (49) des Gehäuses (1) einschraubbar ist.

9. Werkzeughalter nach Anspruch 7 oder 8, **dadurch gekennzeichnet, dass** der Dichtungsring (45) auf seiner der Lagerstelle (3) abgewandten Stirnseite Ausnehmungen (59, 63) aufweist, mit denen vorspringende Eingriffsteile (78 bzw. 81) eines Ringkörpers (75) in Eingriff kommen, der als weiterer Dichtungsring zumindest teilweise einen Labyrinthgang (79, 83) der Labyrinthdichtung (66, 79, 83, 85) bildet.

10. Werkzeughalter nach Anspruch 9, **dadurch gekennzeichnet, dass** der weitere Dichtungsring (75) mit der Werkzeugspindel (5) fest verbunden ist und dass eine nach außen vorspringende Stufe (13) der Werkzeugspindel (5) den weiteren Dichtungsring (75) zumindest teilweise übergreift.

## Claims

1. Tool holder, particularly for use with tool turrets, comprising a housing (1) and a tool spindle (5) received and rotatably mounted therein and driven by at least one bearing (3), said spindle having a receiving space (7) for receiving a replaceable machining tool, a sealing device (45) being arranged between the housing (1) and the tool spindle (5), at least one seal of the sealing device being formed by a brush seal (45), **characterised in that** bristles (67) of the brush seal (45) are part of an insert strip (65), which can be inserted in a receiving groove (55) in a sealing ring (45), and which is provided in the form of a flexible flat band made from plastics material.

2. Tool holder according to claim 1, **characterised in that** the bristles (67) protrude by a pre-definable overhang into the inner chamber of the sealing ring (45) and are in contact with the tool spindle (5).

3. Tool holder according to claim 2, **characterised in that** the individual bristles (67) come into contact with the tool spindle (5) with their curved protruding part.

4. Tool holder according to any one of the preceding claims, **characterised in that** the insert strip **(65)** can be fixed in the receiving groove (55) by means of an adhesive bond (73).

5. Tool holder according to any one of the preceding claims, **characterised in that** at least the bristles (67) of the brush seal (45) are made from a permanently abrasion-resistant plastics material, preferably from a polypropylene material.

6. Tool holder according to any one of the preceding claims, **characterised in that** the sealing ring (45) forming the brush seal is inserted, and in particular screwed, into the housing (1) in front of the first bearing (3) when viewed from the surrounding area.

7. Tool holder according to any one of the preceding claims, **characterised in that** a labyrinth seal (66, 79, 83, 85) seals the brush seal (45) from the environment.

8. Tool holder according to any one of the preceding claims, **characterised in that** the sealing ring (45) is provided with an outer thread (47) and can be screwed into an inner thread (49) of the housing (1), said inner thread being applied to an end face.

9. Tool holder according to either claim 7 or claim 8, **characterised in that** the sealing ring (45) comprises recesses (59, 63) on its end face facing away from the bearing (3), with which protruding engagement parts (78 or 81 respectively) of an annular body (75) engage, said body at least partially forming a labyrinth passage (79, 83) in the labyrinth seal (66, 79, 83, 85) as an additional sealing ring.

10. Tool holder according to claim 9, **characterised in that** the additional sealing ring (75) is securely connected to the tool spindle (5) and **in that** an outwardly protruding step (13) of the tool spindle (5) extends at least partially over the additional sealing ring (75).

## Revendications

1. Porte-outil, à utiliser notamment pour des tourelles revolvers, comprenant une enveloppe (1) et une broche (5) d'outil, qui y est reçue, qui est montée tournante au moyen d'au moins un point (3) de palier, qui peut être entraîné et qui a un espace (7) de réception en vue de recevoir un outil d'usinage pouvant être remplacé, dans lequel, entre l'enveloppe (1) et la broche (5) de l'outil, est disposé un dispositif (45) d'étanchéité, au moins une étanchéité du dispositif d'étanchéité étant formée d'une étanchéité (45) à broche, **caractérisé en ce que** des soies (67) de l'étanchéité (45) à broche font partie d'une bande (65) d'insertion, qui peut être insérée dans une rainure (55) de réception d'une bague (45) d'étanchéité et qui est prévue sous la forme d'un ruban plat souple en une matière plastique.

2. Porte-outil suivant la revendication 1, **caractérisé en ce que** les soies (67) font saillie d'un dépassement pouvant être donné à l'avance dans l'espace intérieur de la bague (45) d'étanchéité et sont en contact avec la broche (5) de l'outil.

3. Porte-outil suivant la revendication 2, **caractérisé en ce que** les diverses soies (67) sont, en étant incurvées par leur déplacement, en contact avec la broche (5) de l'outil.

4. Porte-outil suivant l'une des revendications précédentes, **caractérisé en ce que** la bande (65) d'insertion peut être fixée dans la rainure (55) de réception au moyen d'un collage (73).

5. Porte-outil suivant l'une des revendications précédentes, **caractérisé en ce qu'**au moins les soies (67) de l'étanchéité (45) à broche sont en une matière plastique résistant de manière permanente à l'usure, de préférence en polypropylène.

6. Porte-outil suivant l'une des revendications précédentes, **caractérisé en ce que** la bague (45) d'étanchéité formant l'étanchéité à broche est insérée dans l'enveloppe (1), en y étant notamment vissée, considéré depuis ce qui est alentour, avant le premier point (3) de palier.

7. Porte-outil suivant l'une des revendications précédentes, **caractérisé en ce qu'**une étanchéité (66, 79, 83, 85) à labyrinthe ferme l'étanchéité (45) de broche vers ce qui est alentour.

8. Porte-outil suivant l'une des revendications précédentes, **caractérisé en ce que** la bague (45) d'étanchéité est pourvue dans un filetage (47) extérieur et peut être vissée dans un taraudage (49) de l'enveloppe, mis du côté frontal.

9. Porte-outil suivant la revendication 7 ou 8, **caractérisé en ce que** la bague (45) d'étanchéité a, sur son côté frontal loin du point (3) de palier, des évidements (59, 63), avec lesquels des parties (78 et 81) de pénétration d'un corps (75) annulaire viennent en prise, lequel forme comme autre bague d'étanchéité, au moins en partie, un passage (79, 83) de labyrinthe de l'étanchéité (66, 79, 83, 85) à labyrinthe.

10. Porte-outil suivant la revendication 9, **caractérisé en ce que** l'autre bague (75) d'étanchéité est reliée fixement à la broche (5) de l'outil et **en ce qu'**un gradin (13) en saillie vers l'extérieur de la broche (5) à outil chevauche, au moins en partie, l'autre bague (75) d'étanchéité.
